# EUROPEAN PATENT SPECIFICATION

(11) **EP 2 796 432 B1**
(45) Date of publication and mention of the grant of the patent: **02.09.2015**
(21) Application number: 13185474.7
(22) Date of filing: 23.09.2013
(51) Int. Cl.: C03C 17/34, C03C 17/42, F24C 15/10, C03C 17/44

(54) **Glass top plate for cooker and process for manufacturing the same**
Glaskochplattenoberteil und Verfahren zur Herstellung davon
Plaque supérieure en verre pour appareil de cuisson et son procédé de fabrication

(30) Priority: 17.04.2013 JP 2013086819
(43) Date of publication of application: 29.10.2014
(73) Proprietor: NARUMI CHINA CORPORATION, Nagoya-shi Aichi-ken 458-8530 (JP)
(72) Inventor: Nozaki, Akira, Nagoya-shi, Aichi 458-8530 (JP)
(74) Representative: Kramer Barske Schmidtchen Patentanwälte PartG mbB

(56) References cited:
- WO-A1-2012/010302
- JP-A- 2008 267 633

## Description

### BACKGROUND OF THE INVENTION

### Field of the Invention

The present invention relates to a glass top plate for a cooker, which is used in the state where an object such as a sensor is adhered to the back surface side thereof, and a process for manufacturing the same.

### Description of the Related Art

In recent years, electric cookers including a heating device such as an infrared heating device, a radiant heater or an electromagnetic heating device are getting popular. Electric cookers have a glass top plate for a cooker, which is placed on the top of the heating device. Generally, a light shielding property for concealing an inner structure of the electric cookers is required of the glass top plate for a cooker. Design is also required of the glass top plate for a cooker, and, in recent years, pearly (silver type) glass top plates for a cooker are widely used.

So far, there have been developed various glass top plates for a cooker wherein a light shielding layer or paint layer into which various pigments are incorporated is formed on a transparent glass plate. Generally, the light shielding layer or paint layer is formed on a back surface which is reverse side of a cooking surface on which cooking utensils such as a pot is to be placed.

An object to be adhered such as a temperature sensor is closely adhered to the back surface of the glass top plate for a cooker. At this time, silicone grease is applied to the back surface of the glass top plate, in order to improve the adhesiveness of the object. Specifically, such an object to be adhered has been closely adhered to the glass top plate for a cooker via silicone grease.

However, the application of silicone grease to the back surface of the glass top plate for a cooker causes a problem that, with use, an adhesion mark of the object is visually recognized, from the cooking surface side, as a stain of silicone grease.

Thus, for example, there has been developed a glass top plate for a cooker, having a transparent glass plate, a light shielding film laminated on a surface of the glass plate and a heat resistant resin layer laminated on the light shielding film (see Patent Document 1). The light shielding film can be composed of an inorganic pigment layer including inorganic pigments and glass or composed of a luster layer (metal gloss film).

### Patent Document

Patent Document 1: JP 2003-338360 A

### SUMMARY OF THE INVENTION

However, the luster layer is high in cost, and the glass top plate for a cooker with the inorganic pigment layer and the heat resistant resin layer can suppress the appearance of a stain of silicone grease, but it is insufficient. Specifically, it can suppress the appearance of a stain to such an extent that no stain can be visually recognized, when light is illuminated and reflected on a glass top plate for a cooker, or in a bright room. However, a stain is visually recognized in a dark room, for example, under an environment wherein light comes in from behind a cooking parson (visually recognizing person), and thus an improvement is demanded. Further, stain looks darker in color than the ambient color, and thus is apt to become prominent in a silver-type glass top plate for a cooker.

The present invention has been made in view of such backgrounds, and it intends to provide a glass top plate for a cooker which can be manufactured at a low cost and can prevent the appearance of a stain caused by silicone grease, irrespective of indoor environment, and a process for manufacturing the same.

One aspect of the present invention resides in a glass top plate for a cooker which is used in the state where an object is adhered to the back surface side thereof via silicone grease including
a glass substrate composed of translucent low expansion glass ceramics,
a pearly paint layer laminated on the back surface side of the glass substrate, and
a heat resistant light shielding layer laminated on the outside of the pearly paint layer, wherein
the pearly paint layer includes a silica film containing titanium oxide and/or zirconium oxide along with silica as the main component, and pearly pigments dispersed in the silica film,
the pearly pigment includes an inorganic pigment and a pearly coating which covers the inorganic pigment and includes at least one material selected from titanium oxide, zirconium oxide and iron oxide, and
the heat resistant light shielding layer includes a heat resistant resin and a black-type inorganic pigments dispersed in the heat resistant resin.

Another aspect of the present invention resides in a process for manufacturing the glass top plate for a cooker including
a pearly paint layer forming step of applying a paint coating material containing a silica forming material composed of a silicone resin and/or a silica sol, an additive composed of at least one material selected from titanium resinate, zirconium resinate, a titanium oxide sol and a zirconium oxide sol, and the pearly pigments to the back surface side of the glass substrate and baking the paint coating material, thereby forming the pearly paint layer, and
a light shielding layer forming step of applying a coating material for light shielding containing a heat resistant resin raw material and the black-type inorganic pigments to the back surface side of the glass substrate and curing the coating material, thereby forming the heat resistant light shielding layer, after the pearly paint layer forming step.

The glass top plate for a cooker has, on the back surface side of the glass substrate, a structure composed of at least two layers, i.e., the pearly paint layer having the silica film containing titanium oxide and/or zirconium oxide and the heat resistant light shielding layer. Therefore, even after long-term use of the glass top plate in the state where the object is adhered via silicone grease to the back surface side thereof, the visual recognition of silicone grease stain from the cooking surface side can be prevented. In the glass top plate, the visual recognition of a stain can be prevented, as described above, not only in bright rooms, but also in dark rooms. Specifically, the appearance of a stain caused by silicone grease can be prevented irrespective of indoor environment.

The glass top plate for a cooker has the pearly paint layer containing the pearly pigments, and, when observed from the cooking surface side, exhibits a bright silver color (pearly), and is excellent in design. In a glass top plate for a cooker having such silver color, the above stain of silicone grease tends to be easily prominent. However, in the glass top plate having the above characteristic two-layer structure, the appearance of a stain can be prevented while the glass top plate has silver color.

The glass top plate does not necessarily require the formation of a luster layer including a noble metal or the like, and thus can be manufactured at a low cost.

The glass top plate for a cooker has the heat resistant light shielding layer composed of the heat resistant resin and the black-type inorganic pigments dispersed in the heat resistant resin. The heat resistant light shielding layer can enhance the concealing property of the glass top plate. Therefore, when the glass top plate is used in the state where it is placed on the top of a cooker, the inner structure of the cooker can be concealed. Further, the heat resistant light shielding layer is excellent in heat resistance, so that the glass top plate can be improved in the heat resistance.

The glass top plate for a cooker also has the above characteristic two-layer structure. Therefore, even when the glass top plate is heated at a temperature above the heat resistance limit temperature of the heat resistant resin in the heat resistant light shielding layer, for example, by partial abnormal heating so that the heat resistant resin is thermally decomposed, the change thereof becomes difficult to recognize as a color change. Therefore, the glass top plate has excellent heat resistance, and the initial design thereof is difficult to be impaired.

A process for manufacturing the glass top plate for a cooker includes the pearly paint layer forming step and the light shielding layer forming step.

In the pearly paint layer forming step, the paint coating material containing the silica forming material, the additive and the pearly pigments is applied to the back surface side of the glass substrate and then baked. This can result in the formation of the pearly paint layer having the silica film and the pearly pigments dispersed in the silica film.

The paint coating material including the additive composed of at least one material selected from titanium resinate, zirconium resinate, the titanium oxide sol and the zirconium oxide sol is used in the pearly paint layer forming step. Therefore, due to the action of the additive, the pearly paint layer having the silica film which can prevent permeation of silicone grease can be formed in the pearly paint layer forming step. Therefore, in the glass top plate for a cooker, even when silicone grease applied to the back surface side thereof penetrates into the heat resistant light shielding layer, permeation of silicone grease into the pearly paint layer can be prevented. Therefore, in the glass top plate for a cooker, the appearance of a stain caused by silicone grease can be prevented not only in a bright room, but also in a dark room.

In the light shielding layer forming step, the coating material for light shielding is applied to the back surface side of the glass substrate and then cured after the pearly paint layer forming step. This allows the formation of the heat resistant light shielding layer. The heat resistant light shielding layer has the heat resistant resin and the black-type inorganic pigments dispersed in the heat resistant resin, and thus has excellent heat resistance. Further, the heat resistant light shielding layer also has excellent light shielding property, and thus can enhance the concealing property of the glass top plate for a cooker.

### BRIEF DESCRIPTION OF THE DRAWINGS

FIG. 1 is an explanatory view showing a cross-sectional structure of a glass top plate for a cooker wherein a pearly paint layer and a heat resistant light shielding layer are laminated in Example 1.
FIG. 2 is an explanatory view showing an enlarged partial cross-sectional structure of the pearly paint layer in Example 1.
FIG. 3 is an explanatory view showing an enlarged partial cross-sectional structure of the heat resistant light shielding layer in Example 1.
FIG. 4 is an explanatory view showing a cross-sectional structure of a glass top plate for a cooker wherein a pearly paint layer, a luster layer and a heat resistant light shielding layer are laminated in Example 5.

### MODE FOR CARRYING OUT THE INVENTION

A preferred embodiment of the glass top plate for a cooker will now be explained.

The glass top plate for a cooker is used as a top plate for electric heating cookers including the heating device such as an infrared heating device, a radiant heater or an electromagnetic heating device. Preferably, it may be used as a top plate for an electromagnetic cooker including an electromagnetic heating device (Induction Heating (IH) device). In the glass top plate for a cooker, the surface on which a pot or the like is to be placed is defined as the cooking surface, and its reverse side is the back surface. The back surface is a surface facing the heating device and the like inside a cooker when the glass top plate is disposed on the top of the cooker.

The glass top plate for a cooker has the glass substrate, and the pearly paint layer and the heat resistant light shielding layer laminated on the back surface side of the glass substrate. The heat resistant light shielding layer is laminated on the outside of the pearly paint layer. The heat resistant resin layer can be laminated on the pearly paint layer in a direct contact with the pearly paint layer, but can also be laminated on another layer such as a luster layer as described below formed on the pearly paint layer. Specifically, another layer can be formed between the heat resistant light shielding layer and the pearly paint layer. Preferably, the heat resistant light shielding layer may be the outermost layer on the back surface side of the glass substrate.

The pearly paint layer can be formed at a thickness of 2-5 µm, for example. The pearly paint layer has the silica film and the pearly pigments dispersed in the silica film. The silica film includes titanium oxide and/or zirconium oxide, and silica as the main component.

The content of titanium oxide and/or zirconium oxide in the silica film may preferably be 0.5-20 mass %.

When the content of titanium oxide and/or zirconium oxide is less than 0.5 mass %, the effect of addition thereof becomes insufficient so that the above effect of preventing the appearance of a stain is likely to be lowered. On the other hand, when the content exceeds 20 mass %, it may probably be difficult to sufficiently adhere the pearly paint layer to the glass substrate in the formation of the pearly paint layer. From a similar viewpoint, the content of titanium oxide and/or zirconium oxide in the silica film is more preferably 1-10 mass %, even more preferably 2-8 mass %.

The content of titanium oxide and/or zirconium oxide in the silica film is the amount (mass %) of titanium oxide and/or zirconium oxide per the total amount (100 mass %) of silica (SiO₂), titanium oxide (TiO₂) and zirconium oxide (ZrO₂) constituting the silica film. In the silica film, either one of titanium oxide and zirconium oxide is an essential component, and the other is a selective component. Thus, when either of titanium oxide and zirconium oxide is not contained in the silica film, the content of titanium oxide and/or zirconium oxide can be calculated while the content of the one not contained therein is defined as 0.

The content of titanium oxide and/or zirconium oxide in the silica film can be measured, for example, by X-ray photoelectron spectrometry (XPS). In the meantime, the content of titanium oxide and/or zirconium oxide in the silica film is the amount of titanium oxide and/or zirconium oxide contained in the silica film itself, not containing the amount of titanium oxide or zirconium oxide contained in a pearly coating of the pearly pigments dispersed in the silica film.

Also, the pearly pigment is composed of the inorganic pigment and the pearly coating which covers the inorganic pigments. The inorganic pigment is composed of, for example, kaolin, talc, sericite, pyrophyllite, natural mica, synthetic mica and aluminum oxide.

The pearly coating is composed of at least one material selected from titanium oxide, zirconium oxide and iron oxide.

The pearly pigment is obtained by covering the inorganic pigment with at least one material selected from titanium oxide, zirconium oxide and iron oxide.

The content of the pearly pigments in the pearly paint layer is preferably 120-500 parts by mass based on 100 parts by mass of the silica film (total amount of silica, titanium oxide and zirconium oxide). In the case of less than 120 parts by mass, there is a possibility that the pearly paint layer cannot sufficiently exhibit pearly color tone. On the other hand, when the content exceeds 500 parts by mass, there is a possibility that the adhesion force of the pearly paint layer to the glass substrate may be lowered. From a similar viewpoint, the content of the pearly pigments is more preferably 200-425 parts by mass, and even more preferably 250-375 parts by mass, based on 100 parts by mass of the silica film.

The glass substrate is composed of translucent low expansion glass ceramics. The thickness of the glass substrate can be defined, for example, as 3-6 mm.

As the translucent low expansion glass ceramics, those having translucency and a low expansion rate are preferable. For example, those wherein β-quartz solid solutions are precipitated in the main crystal phase are preferably used.

The volume crystallinity of the translucent low expansion glass ceramics including precipitated β-quartz solid solutions is about 70%, and the crystal size is 0.1 µm or less. The β-quartz solid solutions show negative expansion characteristics, which cancels out the positive expansion characteristics of the residual glass phase so that the coefficient of thermal expansion becomes approximately zero. The refractive index (nD) of the translucent low expansion glass ceramics including precipitated β-quartz solid solutions is 1.541, and the size of the precipitated crystals of the β-quartz solid solutions is 0.1 µm or less, which is smaller than the wavelength of visible light. The refractive indexes of the crystal phase and residual glass phase are approximately equivalent. Therefore, the glass substrate composed of the translucent glass ceramics shows no light scattering, is transparent in appearance, and well transmits light within a visible light region to light within an infrared region.

The glass substrate is preferably made of lithium aluminosilicate glass.

In this case, the mechanical strength and heat resistance required of a glass top plate for a cooker can be sufficiently secured.

At least a part of silica present in the silica film may preferably form an Si-O-Si bond with at least a part of silanol groups present on a surface of the glass substrate.

In this case, the close adhesiveness between the glass substrate and the pearly paint layer can be enhanced. The Si-O-Si bond can be formed by baking the paint coating material onto the back surface side of the glass substrate.

At least a part of silica present in the silica film may preferably form an Si-O-M bond with at least a part of metal atoms M (provided that M is Ti, Zr or Fe) present in the pearly coating of the pearly pigment.

In this case, crack generation due to a difference in thermal contraction between the glass substrate and the pearly paint layer can be prevented. The above Si-O-M bond can be formed by baking the paint coating material.

Next, the heat resistant light shielding layer is composed of the heat resistant resin and the black-type inorganic pigments dispersed in the heat resistant resin. The heat resistant light shielding layer preferably has heat resistance of 200°C or higher. The heat resistant light shielding layer can be formed, for example, at a thickness of 0.01-50 µm. The thickness is preferably 0.1-10 µm, and more preferably 0.5-5 µm.

The heat resistant resin preferably includes a silicone resin, a polyimide resin, a polyamide resin, a fluorine resin, or a complex of more than two kinds of those resins.

In this case, the heat resistant light shielding layer can exert excellent heat resistance. More preferably, the heat resistant resin contains a silicone resin as the main component.

The usable black-type inorganic pigment is composed of at least one material selected from, for example, Cr-Fe-based oxides, Cu-Cr-Mn-based oxides, Co-Mn-Cr-Fe-based oxides, Co-Ni-Cr-Fe-based oxides and Co-Ni-Cr-Fe-Mn-based oxides. The compounding ratio of the black-type inorganic pigments to be incorporated in the heat resistant light shielding layer can be appropriately controlled depending, for example, on the light shielding property of the heat resistant light shielding layer.

The glass top plate for a cooker may have a luster layer including a noble metal and/or a metal oxide between the pearly paint layer and the heat resistant light shielding layer.

In this case, the thickness of the pearly paint layer can be increased. Therefore, the glass top plate for a cooker can be brighter in color, and the design thereof can be enhanced.

Metal components of noble metals and metal oxides constituting the luster layer include, for example, Au, Pt, Pd, Rh, Ru, Bi, Sn, Ni, Fe, Cr, Ti, Ca, Si, Ba, Sr, Mg, Ag, Zr, In and Mn. The luster layer includes any of these noble metals, metals and metal oxides or a combination of more than two kinds thereof. The luster layer can be formed, for example, at a thickness of 1 µm or less. If the thickness is increased too much, the cost would increase.

The glass top plate for a cooker can be manufactured by carrying out the pearly paint layer forming step and the light shielding layer forming step.

In the pearly paint layer forming step, the pearly paint layer is formed by applying the paint coating material to the back surface side of the glass substrate and baking it. The paint coating material contains the silica forming material composed of the silicone resin and/or the silica sol, the additive composed of at least one material selected from titanium resinate, zirconium resinate, the titanium oxide sol and the zirconium oxide sol, and the pearly pigments obtained by covering the inorganic pigments with at least one material selected from titanium oxide, zirconium oxide and iron oxide.

After baking, the silica forming material generates silica, and the additive generates titanium oxide and/or zirconium oxide. The compounding ratio of the silica forming material, additive and pearly pigments to be incorporated in the paint coating material can be appropriately controlled depending on the above preferred content of the titanium oxide and/or zirconium oxide in the silica film formed after baking or the above preferred content of the pearly pigments dispersed in the silica film.

The silica forming material composed of the silicone resin and/or the silica sol forms the silica film after baking, and serves as a binder to bind the pearly pigments and the glass substrate.

The silicone resin refers to a polymer of organosilicon compounds having a siloxane bond as the main backbone, and commercial products such as straight silicone varnish KR271 (manufactured by Shin-Etsu Chemical Co., Ltd.), modified silicone varnish KR211 (manufactured by Shin-Etsu Chemical Co., Ltd.), silicone alkyd varnish (manufactured by Shin-Etsu Chemical Co., Ltd.) and silicone epoxy varnish ES100N (manufactured by Shin-Etsu Chemical Co., Ltd.) can be utilized.

As the silica sol, for example, a silica sol obtained by hydrolyzing ethyl silicate or the like and a colloidal silica sol can be used.

In addition to the silica forming material, additive and pearly pigments, an organic solvent, a thickening resin and the like can be added to the paint coating material. These organic solvent and thickening resin are used to facilitate the application of the paint coating material, and the amounts thereof to be added can be appropriately controlled in consideration of the viscosity of the coating material. Organic components in the paint coating material are caused to disappear during baking. A solvent in which the silica forming material can be dissolved can be used as the organic solvent. Further, a resin which burns more easily than the silica forming material and is compatible with the silica forming material can be used as the thickening resin.

The temperature for baking the paint coating material in the pearly paint layer forming step may preferably be 500-900°C.

When the baking temperature is lower than 500°C, there is a possibility that the organic components contained in the paint coating material cannot sufficiently be decomposed and eliminated. On the other hand, when the baking temperature is above 900°C, there is a possibility that the temperature may be beyond the crystallinity of the glass substrate, resulting in a possibility of fewer options for the glass substrate material. The temperature for baking the paint coating material is more preferably 750-850°C.

In the light shielding layer forming step, the heat resistant light shielding layer is formed by applying the coating material for light shielding to the back surface side of the glass substrate and curing it. The coating material for light shielding contains a heat resistant resin raw material which generates a heat resistant resin upon curing and black-type inorganic pigments.

An organic solvent can be added to the coating material for light shielding in order to facilitate the application thereof. The amount of the organic solvent to be added can be appropriately controlled in consideration of the viscosity of the coating material, curing characteristics and the like.

The heat resistant light shielding layer can be formed on the back surface side of the glass substrate and on the outside of the pearly paint layer. In the case where no other layer such as the luster layer is provided between the pearly paint layer and the heat resistant light shielding layer, the heat resistant light shielding layer can be laminated on the pearly paint layer so as to be in contact with the pearly paint layer. In this case, the heat resistant light shielding layer can be formed by applying the coating material for light shielding onto the pearly paint layer and then curing it.

In the case where another layer such as the luster layer is provided between the pearly paint layer and the heat resistant light shielding layer, the heat resistant light shielding layer can be formed by applying the coating material for light shielding onto the layer (for example, luster layer) and then curing it.

A luster layer forming step of applying a dilute solution of an organometallic compound to the back surface side of the glass substrate and baking the dilute solution between the pearly paint layer forming step and the light shielding layer forming step, thereby forming a luster layer between the pearly paint layer and the heat resistant light shielding layer may is performed.

In this case, the thickness of the pearly paint layer can be increased. Therefore, the glass top plate for a cooker can be brighter in color, and the design thereof can be enhanced.

The metal component of the organic metal compound includes, for example, such as Au, Pt, Pd, Rh, Ru, Bi, Sn, Ni, Fe, Cr, Ti, Ca, Si, Ba, Sr, Mg, Ag, Zr, In, Mn, or the like. The diluted solution of the organometallic compound may each be used alone, or a plurality of the solution can be mixed in arbitrary proportions.

The temperature for baking the diluted solution of the organometallic compound can be defined, for example, as 600-900°C.

### Description of the Examples

### (Example 1)

Next, a glass top plate for a cooker according to Examples will be explained by use of drawings.

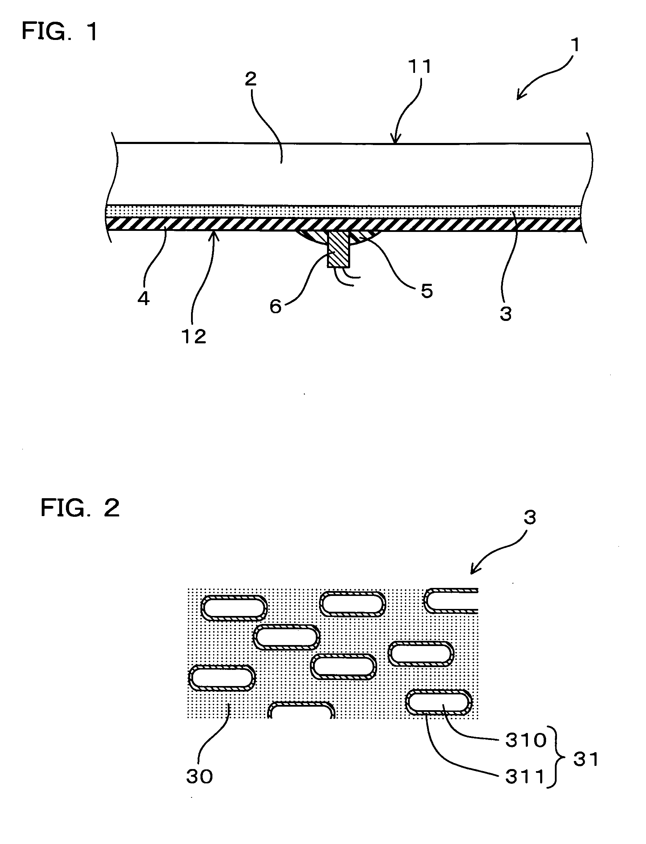

As shown in FIG. 1, a glass top plate 1 for a cooker of this Example is used in the state where an object 6 is closely adhered to a back surface side 12 via silicone grease 5. The object 6 to be adhered is, for example, a sensor such as a temperature sensor. In the glass top plate 1 for a cooker, the surface on the side on which a pot or the like is to be placed is a cooking surface 11, and its reverse side is the back surface 12. The back surface 12 is a surface facing the heating device and the like inside a cooker when the glass top plate 1 is placed on the top of the cooker.

The glass top plate 1 for a cooker has a glass substrate 2 composed of translucent low expansion glass ceramics, a pearly paint layer 3 laminated on the back surface side 12 thereof, and a heat resistant light shielding layer 4 laminated on the outside thereof. In this Example, the heat resistant light shielding layer 4 is laminated on the pearly paint layer 3 in a direct contact therewith.

The glass substrate 2 is composed of lithium aluminosilicate glass wherein the main crystal phase deposits β-quartz solid solutions. Specifically, the product "Neo Serum N-0" with a coefficient of thermal expansion of -1 × 10⁻⁷/°C (30-380°C) manufactured by Nippon Electric Glass Co., Ltd. (hereinafter referred to as "N-0") was used as the glass substrate 2.

As shown in FIGs. 1 and 2, the pearly paint layer 3 has a silica film 30 including titanium oxide along with silica as the main component and pearly pigments 31 dispersed in this silica film 30. The content of titanium oxide in the silica film 30 is 7.7 mass %, and the content of silica therein is 92.3 mass %. Further, the pearly pigments 31 include inorganic pigments 310 composed of mica and a pearly coating 311 composed of titanium oxide and covering the inorganic pigments 310, as shown in FIG. 2. At least a part of silica present in the silica film 30 forms an Si-O-Si bond with at least a part of silanol groups present on a surface of the glass substrate 2. At least a part of silica present in the silica film 30 forms an Si-O-Ti bond with at least a part of Ti present in the pearly coating 311 of the pearly pigments 31.

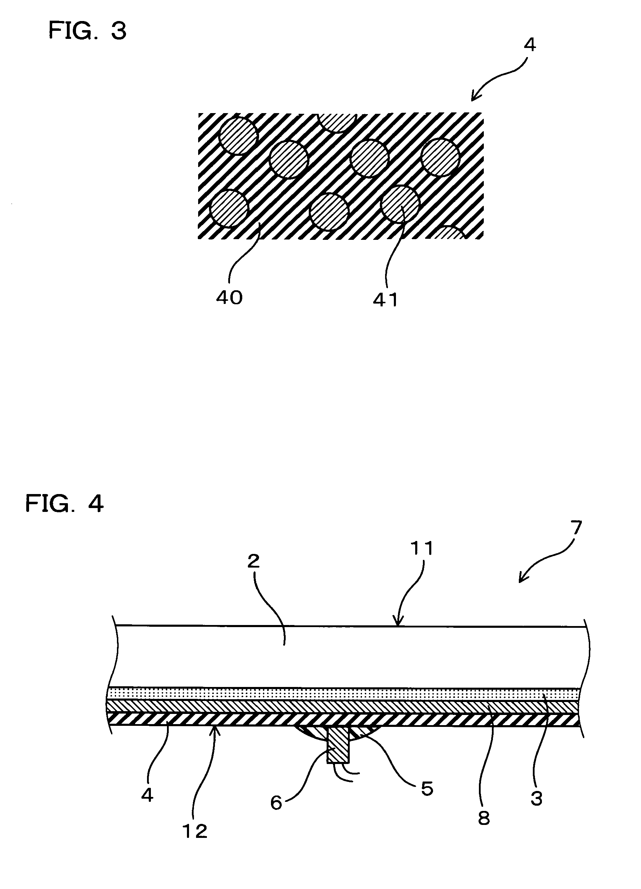

Further, the heat resistant light shielding layer 4 includes a heat resistant resin 40 composed of a silicone resin and black-type inorganic pigments 41 dispersed in this heat resistant resin 40, as shown in FIGs. 1 and 3.

The glass top plate 1 for a cooker of this Example was manufactured in the following manner.

Specifically, a mica powder was suspended in a dilute aqueous titanate solution to obtain a suspension. This suspension was warmed to a temperature ranging from 70-100°C, followed by hydrolyzation of a titanate to precipitate hydrated titanium oxide on a surface of the mica powder. Thereafter, the mica powder was calcined at a temperature ranging from 700-1000°C. After these procedures, the pearly pigments 31 were obtained by covering the inorganic pigments 310 composed of mica with the pearly coating 311 composed of titanium oxide (see FIG. 2).

Next, a paste-like paint coating material was prepared by kneading 10 parts by mass of pearly pigments, 15 parts by mass of a silicone resin containing 50 mass % of an organic solvent, 2.5 parts by mass of titanium resinate having a Ti content of 15 mass %, 5 parts by mass of a thickening resin and 70 parts by mass of an organic solvent. The paint coating material prepared in this Example is referred to as coating material A, and the composition thereof is shown in Table 1 below. Next, the paste-like paint coating material (coating material A) was applied to one entire surface 12, of the glass substrate 2 composed of translucent low expansion glass ceramics (N-0) and having a thickness of 4 mm by screen printing using a 250-mesh stainless steel screen. Next, this was calcined at a temperature of 800°C, thereby sintering and baking the paint coating material. In this manner, the pearly paint layer 3 was formed on the back surface side 12 of the glass substrate 2. The thickness of the pearly paint layer 3, when measured by a film thickness meter, was 3 µm.

Next, a paste-like coating material for light shielding was prepared by kneading 40 parts by mass of commercial black inorganic pigments, 50 parts by mass of a silicone resin raw material and 10 parts by mass of an organic solvent. Then, the coating material for light shielding was applied to the entire surface of the pearly paint layer 3 formed on the glass substrate 2 by screen printing. Thereafter, the coating material for light shielding was cured by heating it at a temperature of 300°C. In this manner, the heat resistant light shielding layer 4 was formed on the pearly paint layer 3. The thickness of the heat resistant light shielding layer 4, when measured by a film thickness meter, was 10 µm.

In this manner, the glass top plate 1 for a cooker having the glass substrate 2, the pearly paint layer 3 laminated on the back surface side 12 thereof and the heat resistant light shielding layer 4 laminated on the pearly paint layer 3, as shown in FIG. 1, was obtained.

### (Examples 2 to 4 and Comparative Examples 1 and 2)

Then, an explanation will next be made about a glass top plate for a cooker having a pearly paint layer different in silica film composition from that used in Example 1. Examples 2 to 4 and Comparative Examples 1 and 2 relate to a glass top plate for a cooker manufactured in a similar manner as in Example 1, except that a composition of the paint coating material for forming the pearly paint layer was changed. The compositions of the paint coating materials used in the Examples and Comparative Examples are shown in Table 1.

Specifically, Example 2 is an example of a glass top plate for a cooker manufactured using a paint coating material (coating material B) in which the pearly pigments were incorporated in a higher proportion than that employed in Example 1 (see Table 1).

Example 3 is an example of a glass top plate for a cooker manufactured using a paint coating material (coating material C) including zirconium resinate (Zr content: 5 mass %) in place of titanium resinate in Example 1 (see Table 1). In the meantime, in the glass top plate for a cooker in Example 3, the content of zirconium oxide in the silica film is 2.7 mass %, and the content of silica therein is 97.3 mass %.

Example 4 is an example of a glass top plate for a cooker manufactured using a paint coating material (coating material D) in which the pearly pigments were incorporated in a higher proportion than that employed in Example 1 and which includes zirconium resinate (Zr content: 5 mass %) in place of titanium resinate in Example 1 (see Table 1). In the meantime, in the glass top plate for a cooker in Example 4, the content of zirconium oxide in the silica film is 2.7 mass %, and the content of silica therein is 97.3 mass %.

Comparative Example 1 is an example of a glass top plate for a cooker manufactured using a paint coating material (coating material E) containing no titanium resinate or zirconium resinate as the additive (see Table 1).

Comparative Example 2 is an example of a glass top plate for a cooker manufactured using a paint coating material (coating material F) containing no titanium resinate or zirconium resinate as the additive and in which the pearly pigments were incorporated in a higher proportion than that employed in Example 1 (see Table 1).

In the glass top plates for a cooker of Comparative Examples 1 and 2, the silica film contains no titanium oxide or zirconium oxide, and consists of 100 mass % of silica.

Table 1

**(Table 1)**

| Kinds of coating material | | Coating material A | Coating material B | Coating material C | Coating material D | Coating material E | Coating material F |
|---|---|---|---|---|---|---|---|
| Pearly pigments (parts by mass) | | 10 | 14 | 10 | 14 | 10 | 14 |
| Silica forming material (parts by mass) | | 15 | 15 | 15 | 15 | 15 | 15 |
| Additive (parts by mass) | Titanium resinate | 2.5 | 2.5 | - | - | - | - |
| | Zirconium resinate | - | - | 2.5 | 2.5 | - | - |
| Thickening resin (parts by mass) | | 5 | 5 | 5 | 5 | 5 | 5 |
| Organic solvent (parts by mass) | | 70 | 66 | 70 | 66 | 70 | 66 |

### (Experimental Example 1)

Next, tests for judging a stain of silicone grease and heat resistance tests were conducted for the glass top plates for a cooker of Examples 1 to 4 and Comparative Examples 1 and 2 manufactured in the above manner.

### Judgment of stain of silicone grease

The glass top plate 1 for a cooker was placed on the top of a heating device (not shown) of an electromagnetic cooker, and a temperature sensor as the object 6 to be adhered was closely adhered, via silicone grease 5 (silicone oil compound manufactured by Shin-Etsu Chemical Co., Ltd.), onto the back surface side 12 thereof (see FIG. 1). A frying pan (not shown) was placed on the cooking surface 11 of the glass top plate for a cooker, and the electromagnetic cooker was actuated to repeatedly conduct 50 heating and cooling cycles of heating the frying pan at a temperature of 350°C for 5 minutes and then cooling it for 15 minutes. Thereafter, the glass top plate 1 for a cooker was observed from the cooking surface side 11 in an indoor environment wherein light came in from behind an observer to evaluate whether an application mark of silicone grease 5 was visually recognized. The case where no application mark was visually recognized was evaluated as "1", and the case where only a part of the application mark was slightly seen when observed closely was evaluated as "2". The case where no outline of the application mark was seen, but the application mark was visually recognized was evaluated as "3", and the case where the outline of the application mark was visually recognized but was not clearly seen was evaluated as "4". The case where the outline of the application mark was clearly seen was evaluated as "5". As the product level, "2" or higher is acceptable, and "1" is most preferred. The results are shown in Table 2.

### Heat resistance

The glass top plate for a cooker was retained in a thermostatic chamber at respective temperatures, 350°C, 400°C, 450°C, 500°C, 550°C and 600°C for 100 hours. The color difference ΔE of the glass top plates for a cooker before and after retention in the thermostatic chamber was measured by using a color difference meter ("SP60" manufactured by X-Rite, Inc.). The upper limit temperature which satisfies ΔE < 0.8 was investigated. The results are shown in Table 2.

Table 2

**(Table 2)**

| Example/ Comparative Example | Example 1 | Example 2 | Example 3 | Example 4 | Comparative Example 1 | Comparative Example 2 |
|---|---|---|---|---|---|---|
| Kinds of coating material | Coating material A | Coating material B | Coating material C | Coating material D | Coating material E | Coating material F |
| Content of titanium oxide or zirconium oxide in a silica film (parts by mass) | 7.7 (TiO₂) | 7.7 (TiO₂) | 2.7 (ZrO₂) | 2.7 (ZrO₂) | 0 | 0 |
| Presence/absence of a luster layer | absence | absence | absence | absence | absence | absence |
| Judgment of a stain of silicone grease | 1 | 1 | 1 | 1 | 3 | 4 |
| Heat resistance (°C) | 450 | 450 | 450 | 450 | 400 | 350 |

As is known from Table 2, the glass top plates 1 for a cooker of Examples 1 to 4 including the pearly paint layer 3 formed by using the paint coating material containing the above additive prevents visual recognition of a stain of silicone grease 5 from the cooking surface side 11 even after long-term use in the state where the object 6 is closely adhered thereto via silicone grease 5 (see FIG. 1). Especially, in this Example, evaluation was made on the glass top plates 1 having silver color that renders a stain easily prominent in a dark indoor environment wherein a stain is easily observed. However, no stain was confirmed in the glass top plates 1 of Examples 1 to 4. In contrast to this, a stain was visually recognized in the glass top plates of Comparative Examples 1 and 2 including the pearly paint layer formed by using the additive-free paint coating material.

Specifically, in the glass top plates 1 for a cooker of Examples 1 to 4, the pearly paint layer 3 is formed by using the paint coating material containing the additive composed of titanium resinate or zirconium resinate (see FIGs. 1 to 3). These glass top plates 1 for a cooker have a structure composed of at least two layers, i.e., the pearly paint layer 3 having the silica film 30 containing titanium oxide and/or zirconium oxide and the heat resistant light shielding layer 4 on the back surface side 12 of the glass substrate 2. Therefore, the glass top plates 1 for a cooker can prevent visual recognition of a stain of silicone grease from the cooking surface side 11 even after long-term use in the state where the object 6 is closely adhered thereto via silicone grease 5 to the back surface side 12 thereof. In the glass top plate 1 for a cooker, visual recognition of a stain can be prevented, as described above, not only in a bright room, but also in a dark room. In other words, the appearance of a stain caused by silicone grease can be prevented irrespective of indoor environment.

The glass top plate 1 for a cooker has the pearly paint layer 3 containing the pearly pigments 31, and, when observed from the cooking surface side 11, exhibits a bright silver color (pearly), and is excellent in design. In the glass top plate 1 for a cooker having such silver color, the above stain of silicone grease tends to be easily prominent. However, in the glass top plate 1 for a cooker having the above characteristic two-layer structure, the appearance of a stain can be prevented while the glass top plate has silver color. The glass top plate 1 for a cooker does not necessarily require the formation of the luster layer including a noble metal or the like, and thus can be manufactured at a low cost.

The glass top plate 1 for a cooker has the heat resistant light shielding layer 4 including the heat resistant resin 40 and the black-type inorganic pigments 41 dispersed in the heat resistant resin 40. Thus, the light shielding property of the glass top plate 1 for a cooker can be enhanced. Therefore, when the glass top plate 1 is used in the state where it is placed on the top of a cooker, the inner structure of the cooker can be concealed. The glass top plates 1 for a cooker of Examples 1 to 4 have the characteristic two-layer structure having the pearly paint layer 3 containing titanium oxide and/or zirconium oxide and the heat resistant light shielding layer 4. Therefore, even when the glass top plates 1 for a cooker are heated at a temperature above the heat resistance limit temperature of the heat resistant resin in the heat resistant light shielding layer 4 to cause thermal decomposition of the heat resistant resin, the change thereof becomes difficult to recognize as a color change. Actually, the glass top plates 1 for a cooker of Examples 1 to 4 showed sufficiently excellent heat resistance from the viewpoint of the color difference ΔE (see Table 2). Thus, the glass top plates 1 for a cooker of Examples 1 to 4 are excellent in heat resistance, and the initial design thereof is difficult to be impaired.

### (Example 5)

This Example is an example of a glass top plate 7 for a cooker having a luster layer 8 between the pearly paint layer 3 and the heat resistant light shielding layer 4 (see FIG. 4).

As shown in FIG. 4, the glass top plate 7 for a cooker of this Example has a structure similar to that of Example 1 except that the luster layer 8 is present. In FIG. 4 referred to in connection with this Example, the same symbols as those in Example 1 represent the same components, and thus the preceding explanations are referred to.

In the preparation of the glass top plate 7 for a cooker of this Example, the pearly paint layer 3 was firstly formed on the glass substrate 2 as is the case with Example 1. The coating material A in Example 1 was used as the paint coating material. Next, a commercial black luster paste ("L900 (black)") manufactured by Naniwa Kin-Eki Co., Ltd.) was applied to the entire surface of the pearly paint layer 3 by screen printing using a 250-mesh stainless steel screen. Next, this was calcined at a temperature of 800°C, thereby baking the luster paste. In this manner, the luster layer 8 was laminated on the pearly paint layer 3 on the back surface side 12 of the glass substrate 2. The thickness of the luster layer 8, when measured by a film thickness meter, was 0.7 µm.

Next, a paste-like coating material for light shielding was prepared as in Example 1, and applied to the entire surface of the luster layer 8 by screen printing, and then heated at a temperature of 300°C, thereby curing the coating material for light shielding. In this manner, the heat resistant light shielding layer 4 was formed on the luster layer 8. The thickness of the heat resistant light shielding layer 4 is similar to that in Example 1.

In this manner, a glass top plate 7 for a cooker having the glass substrate 2, the pearly paint layer 3 laminated on the back surface side 12 thereof, the luster layer 8 laminated on the pearly paint layer 3, and the heat resistant light shielding layer 4 laminated on the luster layer 8, as shown in FIG. 4, was obtained.

### (Examples 6 to 8 and Comparative Example 3)

Next, examples of a glass top plate for a cooker having a pearly paint layer different in silica film composition from that of Example 5 will be explained. Examples 6 to 8 and Comparative Example 3 relate to a glass top plate for a cooker manufactured in a similar manner as in Example 5 except that the composition of the paint coating material for forming the pearly paint layer was changed. In Examples 6 to 8 and Comparative Example 3, the pearly paint layer was formed by using the coating materials A to D and F shown in Table 1.

### (Experimental Example 2)

Next, tests for judging a stain of silicone grease and heat resistance tests were conducted, in a similar manner as in Experimental Example 1, for the glass top plates for a cooker of Examples 5 to 8 and Comparative Example 3 manufactured in the above manner. The results are shown in Table 3.

Table 3

**(Table 3)**

| Example/ Comparative Example | Example 5 | Example 6 | Example 7 | Example 8 | Comparative Example 3 |
|---|---|---|---|---|---|
| Kinds of coating material | Coating material A | Coating material B | Coating material C | Coating material D | Coating material F |
| Content of titanium oxide or zirconium oxide in a silica film (parts by mass) | 7.7 (TiO₂) | 7.7 (TiO₂) | 2.7 (ZrO₂) | 2.7 (ZrO₂) | 0 |
| Presence/absence of a luster layer | presence | presence | presence | presence | presence |
| Judgment of a stain of silicone grease | 1 | 1 | 1 | 1 | 4 |
| Heat resistance (°C) | 500 | 500 | 500 | 500 | 450 |

As is known from Table 3, the glass top plates 7 for a cooker of Examples 5 to 8 including the pearly paint layer 3 formed by using the paint coating material containing the above additive prevents visual recognition of a stain of silicone grease 5 from the cooking surface side 11 even after long-term use in the state where the object 6 is closely adhered thereto via silicone grease 5, irrespective of the presence or absence of the luster layer 8, as is the case with Examples 1 to 4. Especially, in this Example, evaluation was made on the glass top plates 7 for a cooker having silver color that renders a stain easily prominent in a dark indoor environment wherein a stain is easily observed. However, no stain was confirmed in the glass top plates 7 of Examples 5 to 8 as is the case with Examples 1 to 4. In contrast to this, a stain was visually recognized in the glass top plate for a cooker of Comparative Example 3 including the pearly paint layer formed by using the additive-free paint coating material. Additionally, the glass top plates 7 for a cooker of Examples 5 to 8 provide similar functional effects to those of Examples 1 to 4.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Explanation of Reference Numerals

1. Glass top plate
12. Back surface side
2. Glass substrate
3. Pearly paint layer
4. Heat resistant light shielding layer
5. Silicone grease
6. Object

## Claims

1. A glass top plate (1, 7) for a cooker, which is used in the state where an object (6) is adhered to the back surface side (12) thereof via silicone grease (5), the glass top plate (1, 7) comprising:
a glass substrate (2) made of translucent low expansion glass ceramics,
a pearly paint layer (3) laminated on the back surface side (12) of the glass substrate (2), and
a heat resistant light shielding layer (4) laminated on the backside of the pearly paint layer (3), wherein
the pearly paint layer (3) includes a silica film (30) containing titanium oxide and/or zirconium oxide along with silica as the main component, and pearly pigments (31) dispersed in the silica film (30),
the pearly pigment (31) includes an inorganic pigment (310) and a pearly coating (311) which covers the inorganic pigment (310) and includes at least one material selected from titanium oxide, zirconium oxide and iron oxide, and
the heat resistant light shielding layer (4) includes a heat resistant resin (40) and a black-type inorganic pigments (41) dispersed in the heat resistant resin (40).

2. The glass top plate (1, 7) for a cooker according to claim 1, wherein the content of titanium oxide and/or zirconium oxide in the silica film (30) is 0.5-20 mass %.

3. The glass top plate (1, 7) for a cooker according to claim 1 or 2, wherein the glass substrate (2) is made of lithium aluminosilicate glass.

4. The glass top plate (1, 7) for a cooker according to any one of claims 1 to 3, wherein at least a part of silica present in the silica film (30) forms an Si-O-Si bond with at least a part of silanol groups present on a surface of the glass substrate (2).

5. The glass top plate (1, 7) for a cooker according to any one of claims 1 to 4, wherein at least a part of silica present in the silica film (30) forms an Si-O-M bond with at least a part of metal atoms M (provided that M is Ti, Zr or Fe) present in the pearly coating (311) of the pearly pigment (31).

6. The glass top plate (1, 7) for a cooker according to any one of claims 1 to 5, wherein the heat resistant resin (40) includes a silicone resin, a polyimide resin, a polyamide resin, a fluorine resin, or a complex of more than two kinds of those resins.

7. The glass top plate (1, 7) for a cooker according to any one of claims 1 to 6, further comprising a luster layer (8) including a noble metal and/or a metal oxide between the pearly paint layer (3) and the heat resistant light shielding layer (4).

8. A process for manufacturing the glass top plate (1, 7) for a cooker according to any one of claims 1 to 7, comprising:
a pearly paint layer (3) forming step of applying a paint coating material containing a silica forming material comprising a silicone resin and/or a silica sol, an additive comprising at least one material selected from titanium resinate, zirconium resinate, a titanium oxide sol and a zirconium oxide sol, and the pearly pigments (31) to the back surface side (12) of the glass substrate (2) and baking the paint coating material, thereby forming the pearly paint layer (3); and
a light shielding layer forming step of applying a coating material for light shielding containing a heat resistant resin raw material and the black-type inorganic pigments (41) to the back surface side (12) of the glass substrate (2) and curing the coating material, thereby forming the heat resistant light shielding layer (4), after the pearly paint layer (3) forming step.

9. The process for manufacturing the glass top plate (1, 7) for a cooker according to claim 8, wherein the temperature for baking the paint coating material in the pearly paint layer (3) forming step is 500-900°C.

10. The process for manufacturing the glass top plate (1, 7) for a cooker according to claim 8 or 9, wherein a luster layer forming step of applying a dilute solution of an organometallic compound to the back surface side (12) of the glass substrate (2) and baking the dilute solution between the pearly paint layer (3) forming step and the light shielding layer forming step, thereby forming a luster layer between the pearly paint layer (3) and the heat resistant light shielding layer (4) is performed.

## Patentansprüche

1. Glasoberteilplatte (1, 7) für einen Herd, die in einem Zustand verwendet wird, bei dem ein Gegenstand (6) mittels Silikonfett (5) an deren Rückflächenseite (12) angebracht ist, wobei die Glasoberteilplatte (1, 7) umfasst:
ein Glassubstrat (2), das aus einer lichtdurchlässigen Glaskeramik mit einer geringen Ausdehnung hergestellt ist,
eine perlmuttartige Anstrichmittelschicht (3), die auf die Rückflächenseite (12) des Glassubstrats (2) laminiert ist, und
eine wärmebeständige Lichtabschirmungsschicht (4), die auf die Rückseite der perlmuttartigen Anstrichmittelschicht (3) laminiert ist, wobei
die perlmuttartige Anstrichmittelschicht (3) einen Siliziumoxidfilm (30), der Titanoxid und/oder Zirkoniumoxid zusammen mit Siliziumoxid als Hauptkomponente enthält, und perlmuttartige Pigmente (31), die in dem Siliziumoxidfilm (30) dispergiert sind, umfasst,
wobei das perlmuttartige Pigment (31) ein anorganisches Pigment (310) und eine perlmuttartige Beschichtung (311) umfasst, die das anorganische Pigment (310) bedeckt und mindestens ein Material umfasst, das aus Titanoxid, Zirkoniumoxid und Eisenoxid ausgewählt ist, und
die wärmebeständige Lichtabschirmungsschicht (4) ein wärmebeständiges Harz (40) und anorganische Pigmente des schwarzen Typs (41), die in dem wärmebeständigen Harz (40) dispergiert sind, umfasst.

2. Glasoberteilplatte (1, 7) für einen Herd nach Anspruch 1, bei welcher der Gehalt von Titanoxid und/oder Zirkoniumoxid in dem Siliziumoxidfilm (30) 0,5 bis 20 Massen-% beträgt.

3. Glasoberteilplatte (1, 7) für einen Herd nach Anspruch 1 oder 2, bei der das Glassubstrat (2) aus Lithiumaluminosilikatglas hergestellt ist.

4. Glasoberteilplatte (1, 7) für einen Herd nach einem der Ansprüche 1 bis 3, bei der mindestens ein Teil des Siliziumoxids, das in dem Siliziumoxidfilm (30) vorliegt, eine Si-O-Si-Bindung mit mindestens einem Teil von Silanolgruppen bildet, die auf einer Oberfläche des Glassubstrats (2) vorliegen.

5. Glasoberteilplatte (1, 7) für einen Herd nach einem der Ansprüche 1 bis 4, bei der mindestens ein Teil des Siliziumoxids, das in dem Siliziumoxidfilm (30) vorliegt, eine Si-O-M-Bindung mit mindestens einem Teil von Metallatomen M bildet (mit der Maßgabe, dass M Ti, Zr oder Fe ist), die in der perlmuttartigen Beschichtung (311) des perlmuttartigen Pigments (31) vorliegen.

6. Glasoberteilplatte (1, 7) für einen Herd nach einem der Ansprüche 1 bis 5, bei der das wärmebeständige Harz (40) ein Silikonharz, ein Polyimidharz, ein Polyamidharz, ein Fluorharz oder einen Komplex aus mehr als zwei Arten dieser Harze umfasst.

7. Glasoberteilplatte (1, 7) für einen Herd nach einem der Ansprüche 1 bis 6, die ferner eine Glanzschicht (8), die ein Edelmetall und/oder ein Metalloxid umfasst, zwischen der perlmuttartigen Anstrichmittelschicht (3) und der wärmebeständigen Lichtabschirmungsschicht (4) umfasst.

8. Verfahren zur Herstellung der Glasoberteilplatte (1, 7) für einen Herd nach einem der Ansprüche 1 bis 7, umfassend:
einen Schritt des Bildens einer perlmuttartigen Anstrichmittelschicht (3), bei dem ein Anstrichmittelbeschichtungsmaterial, das ein Siliziumoxid-bildendes Material, das ein Silikonharz und/oder ein Siliziumoxidsol umfasst, ein Additiv, das mindestens ein Material umfasst, das aus einem Titanresinat, einem Zirkoniumresinat, einem Titanoxidsol und einem Zirkoniumoxidsol ausgewählt ist, und die perlmuttartigen Pigmente (31) enthält, auf die Rückflächenseite (12) des Glassubstrats (2) aufgebracht wird und das Anstrichmittelbeschichtungsmaterial gebrannt wird, wodurch die perlmuttartige Anstrichmittelschicht (3) gebildet wird, und
einen Schritt des Bildens einer Lichtabschirmungsschicht nach dem Schritt des Bildens einer perlmuttartigen Anstrichmittelschicht (3), bei dem ein Beschichtungsmaterial für eine Lichtabschirmung, das ein Ausgangsmaterial für ein wärmebeständiges Harz und die anorganischen Pigmente des schwarzen Typs (41) enthält, auf die Rückflächenseite (12) des Glassubstrats (2) aufgebracht wird und das Beschichtungsmaterial ausgehärtet wird, wodurch die wärmebeständige Lichtabschirmungsschicht (4) gebildet wird.

9. Verfahren zur Herstellung der Glasoberteilplatte (1, 7) für einen Herd nach Anspruch 8, bei dem die Temperatur zum Brennen des Anstrichmittelbeschichtungsmaterials in dem Schritt des Bildens einer perlmuttartigen Anstrichmittelschicht (3) 500 bis 900 °C beträgt.

10. Verfahren zur Herstellung der Glasoberteilplatte (1, 7) für einen Herd nach Anspruch 8 oder 9, bei dem ein Schritt des Bildens einer Glanzschicht, bei dem eine verdünnte Lösung einer organometallischen Verbindung auf die Rückflächenseite (12) des Glassubstrats (2) aufgebracht wird und die verdünnte Lösung gebrannt wird, zwischen dem Schritt des Bildens einer perlmuttartigen Anstrichmittelschicht (3) und dem Schritt des Bildens einer Lichtabschirmungsschicht durchgeführt wird, wodurch eine Glanzschicht zwischen der perlmuttartigen Anstrichmittelschicht (3) und der wärmebeständigen Lichtabschirmungsschicht (4) gebildet wird.

## Revendications

1. Plaque supérieure en verre (1, 7) pour un appareil de cuisson, qui est utilisée dans l'état où un objet (6) est collé sur son côté de surface arrière (12) avec de la graisse de silicone (5), la plaque supérieure en verre (1, 7) comprenant :
un substrat de verre (2) fabriqué en vitrocéramiques translucides à faible dilatation,
une couche de peinture nacrée (3) laminée sur le côté de surface arrière (12) du substrat de verre (2) et
une couche faisant écran à la lumière résistant à la chaleur (4) laminée sur le côté arrière de la couche de peinture nacrée (3), dans laquelle
la couche de peinture nacrée (3) comprend un film de silice (30) contenant un oxyde de titane et/ou un oxyde de zirconium avec la silice comme composant principal, et des pigments nacrés (31) dispersés dans le film de silice (30),
le pigment nacré (31) comprend un pigment inorganique (310) et un revêtement nacré (311) qui couvre le pigment inorganique (310) et comprend au moins un matériau sélectionné parmi l'oxyde de titane, l'oxyde de zirconium et l'oxyde de fer et
la couche faisant écran à la lumière résistante à la chaleur (4) comprend une résine résistant à la chaleur (40) et des pigments inorganiques de type noir (41) dispersés dans la résine résistant à la chaleur (40).

2. Plaque supérieure en verre (1, 7) pour un appareil de cuisson selon la revendication 1, dans laquelle la teneur d'oxyde de titane et/ou d'oxyde de zirconium dans le film de silice (30) représente 0,5 à 20% en masse.

3. Plaque supérieure en verre (1, 7) pour un appareil de cuisson selon la revendication 1 ou 2, dans laquelle le substrat de verre (2) est fabriqué en un verre de silicate d'aluminium et de lithium.

4. Plaque supérieure en verre (1, 7) pour un appareil de cuisson selon l'une quelconque des revendications 1 à 3, dans laquelle au moins une partie de la silice présente dans le film de silice (30) forme une liaison Si-O-Si avec au moins une partie des groupes silanol présents sur une surface du substrat de verre (2).

5. Plaque supérieure en verre (1, 7) pour un appareil de cuisson selon l'une quelconque des revendications 1 à 4, dans laquelle au moins une partie de la silice présente dans le film de silice (30) forme une liaison Si-O-M avec au moins une partie des atomes métalliques M (à condition que M soit Ti, Zr ou Fe) présents dans le revêtement nacré (311) du pigment nacré (31).

6. Plaque supérieure en verre (1, 7) pour un appareil de cuisson selon l'une quelconque des revendications 1 à 5, dans laquelle la résine résistant à la chaleur (40) comprend une résine de silicone, une résine de polyimide, une résine de polyamide, une résine fluorée ou un complexe de plus de deux types de ces résines.

7. Plaque supérieure en verre (1, 7) pour un appareil de cuisson selon l'une quelconque des revendications 1 à 6, comprenant en outre une couche de lustre (8) incluant un métal noble et/ou un oxyde métallique entre la couche de peinture nacrée (3) et la couche faisant écran à la lumière résistante à la chaleur (4).

8. Procédé de fabrication de la plaque supérieure en verre (1, 7) pour un appareil de cuisson selon l'une quelconque des revendications 1 à 7, comprenant :
une étape de formation de la couche de peinture nacrée (3) par application d'un matériau de revêtement de peinture contenant un matériau de formation de silice comprenant une résine de silicone et/ou un sol de silice, un additif comprenant au moins un matériau sélectionné parmi le résinate de titane, le résinate de zirconium, un sol d'oxyde de titane et un sol d'oxyde de zirconium et les pigments nacrés (31) sur le côté de surface arrière (12) du substrat de verre (2), et par cuisson du matériau de revêtement de peinture, formant par là-même la couche de peinture nacrée (3) ; et
une étape de formation de la couche faisant écran à la lumière par application d'un matériau de revêtement pour l'écran à la lumière contenant un matériau brut de résine résistant à la chaleur et les pigments inorganiques de type noir (41) au côté de surface arrière (12) du substrat de verre (2), et par cuisson du matériau de revêtement, formant par là-même la couche faisant écran à la lumière résistant à la chaleur (4) après l'étape de formation de la couche de peinture nacrée (3).

9. Procédé de fabrication de la plaque supérieure en verre (1, 7) pour un appareil de cuisson selon la revendication 8, dans lequel la température pour la cuisson du matériau de revêtement de peinture dans l'étape de formation de la couche de peinture nacrée (3) est comprise entre 500 et 900°C.

10. Procédé de fabrication de la plaque supérieure en verre (1, 7) pour un appareil de cuisson selon la revendication 8 ou 9, dans lequel une étape de formation de la couche de lustre par application d'une solution diluée d'un composé organométallique au côté de surface arrière (12) du substrat de verre (2) et par cuisson de la solution diluée entre l'étape de formation de la couche de peinture nacrée (3) et l'étape de formation de couche faisant écran à la lumière, formant par là-même une couche de lustre entre la couche peinture nacrée (3) et la couche faisant écran à la lumière résistante à la lumière (4), est réalisée.
